# EUROPEAN PATENT APPLICATION

(11) **EP 4 770 137 A1**
(43) Date of publication of application: **01.07.2026**
(21) Application number: 25227541.7
(22) Date of filing: 30.12.2025
(51) Int. Cl.: H04R 29/00, B60R 16/023, G05B 17/02, G06F 3/16

(54) **EMULATOR SYSTEM FOR AUDIO**

(30) Priority: 30.12.2024 US 202419005358
(71) Applicant: Harman Becker Automotive Systems, Inc., Novi, MI 48377 (US)
(72) Inventor: CHEN, Zhijun, Kawasaki, 215-0023 (JP)
(74) Representative: Rummler, Felix

(57) **Abstract**

In at least one embodiment, an emulator system including at least one first audio controller is provided. The at least one first audio controller includes a primary field programmable gate array (FPGA), a universal audio network interface sub-board and a secondary FPGA. The primary FPGA is programmed to one of transmit and receive at least one audio signal in a vehicle. The universal audio network interface sub-board is operably coupled to the primary FPGA and is programmed to one or more of transmit or receive the at least one audio signal in accordance with one or more audio network interfaces. The secondary FPGA includes a first communication block that is programmed to enable the primary FPGA to one of transmit or receive the at least one audio signal in accordance with the one or more audio network interfaces to or from the universal audio network interface.

## Description

### TECHNICAL FIELD

Aspects disclosed herein generally relate to a system and a method for an audio emulator. These aspects and others will be discussed in more detail herein.

### BACKGROUND

Within the automotive tech space, various audio systems may undergo exhaustive testing both at the system level and at the component level. Specifically, various audio controllers utilized within the audio system of a vehicle may involve communicating with other audio components via any number of audio related data communication busses. The testing of an audio system while in the presence of so many audio related data communication busses may increase the development and complexity of the audio system while also increasing the amount of time required to test an audio system. Thus, it would be beneficial to streamline the overall testing process for an audio system.

### SUMMARY

In at least one embodiment, an emulator system is provided. The emulator system includes at least one first audio controller. The at least one first audio controller includes a primary field programmable gate array (FPGA), a universal audio network interface sub-board, a universal vehicle network interface sub-board, and a secondary FPGA. The primary (FPGA) is programmed to one of transmit and receive at least one audio signal and at least one vehicle information signal in a vehicle. The universal audio network interface sub-board is operably coupled to the primary FPGA and is programmed to one or more of transmitting or receiving the at least one audio signal in accordance with one or more audio network interfaces. The universal vehicle network interface sub-board is coupled to the primary FPGA and is programmed to one or more of transmitting or receiving the at least one vehicle information signal in accordance with one or more vehicle network interfaces. The secondary FPGA is coupled to the primary FPGA and includes a first communication block and a second communication block. The first communication block is programmed to enable the primary FPGA to one of transmit or receive the at least one audio signal in accordance with the one or more audio network interfaces to or from the universal audio network interface sub-board. The second communication block is programmed to enable the primary FPGA to one of transmit or receive the at least one vehicle information signal in accordance with the one or more vehicle network interfaces to or from the universal vehicle network interface sub-board.

In at least one embodiment, an emulator system including at least one first audio controller is provided. The at least one first audio controller includes a primary field programmable gate array (FPGA), a universal audio network interface sub-board and a secondary FPGA. The primary FPGA is programmed to one of transmit and receive at least one audio signal in a vehicle. The universal audio network interface sub-board is operably coupled to the primary FPGA and is programmed to one or more of transmit or receive the at least one audio signal in accordance with one or more audio network interfaces. The secondary FPGA includes a first communication block that is programmed to enable the primary FPGA to one of transmit or receive the at least one audio signal in accordance with the one or more audio network interfaces to or from the universal audio network interface.

In at least one embodiment, an emulator system is provided. The emulator system includes at least one first audio controller. The emulator system includes a primary field programmable gate array (FPGA), a universal audio network interface sub-board, a universal vehicle network interface sub-board, and a secondary FPGA. The primary (FPGA) is programmed to one of transmit and receive at least one audio signal and at least one vehicle information signal in a vehicle. The universal audio network interface sub-board is operably coupled to the primary FPGA and is programmed to one or more of transmitting or receiving the at least one audio signal in accordance with one or more audio network interfaces. The universal vehicle network interface sub-board is coupled to the primary FPGA and is programmed to one or more of transmitting or receiving the at least one vehicle information signal in accordance with one or more vehicle network interfaces. The secondary FPGA is coupled to the primary FPGA and includes a first communication block and a second communication block. The first communication block is programmed to enable the primary FPGA to one of transmit or receive the at least one audio signal in accordance with the one or more audio network interfaces to or from the universal audio network interface sub-board. The second communication block is programmed to enable the primary FPGA to one of transmit or receive the at least one vehicle information signal in accordance with the one or more vehicle network interfaces to or from the universal vehicle network interface sub-board.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompany drawings in which:
FIGURE 1 depicts one example of an audio emulator system;
FIGURE 2 depicts an audio emulator system in accordance with one embodiment;
FIGURE 3 depicts a process flow for the audio emulator system in accordance with one embodiment; and
FIGUREs 4A - 4C depict the process flow of FIGURE 3 while references aspects related to the audio emulator system in accordance with one embodiment.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

It is generally recognized that a plurality of different audio communication buses may be used to facilitate communication between an audio controller and an amplifier in an audio system for a vehicle. In this regard, the overall vehicle architecture or vehicle Original Equipment Manufacturers (OEMs) may use different communication busses and/or interface structures. For manufacturers of the audio controller and/or the amplifier, this may lead to numerous testing setups or arrangements to tune the overall response for the audio system in the vehicle. In this regard, manufacturers that provide the audio controllers and/or amplifiers in an audio system may undergo long lead times in testing these devices in addition to having to purchase customize testing setups to perform audio related testing.

For example, different audio systems or projects may take time and effort in arranging the audio system and studying usage of a network interface to meet test requirements established by the OEM. Current audio network interfaces or audio communication protocols may include any number of the following issues: (i) a network interface changes from project to project (e.g., electronic Media Orientated Systems Transport (eMOST), INICnet, Automotive Audio Bus (A2B, and Ethernet audio video bridging (AVB), etc.), (ii) updates to a network physical layer such as A2B 1.0 to A2B 2.0, eMOST50 to INICnet 50, etc.), (iii) a vendor's tool personal computer (PC) may be hard to use and/or may not meed the test case, (iv) a difficult to purchase electronic control unit (ECU) from another supplier (or competitor) due to budget, time or other reasons, and/or (iv) some network analyzers lack of a compatible interface that the ECU (or audio controller) requires. In addition, OEM requirements are different and vendor's who providing the different interfaces, busses, etc. generally require many updates and revisions. Further, as the speed for a network interface increases, it may be necessary to purchase new tools again.

It is generally advantageous to provide an audio emulator system that provides an audio emulator system that is practically universal to the different types of audio buses, interfaces, network analyzers, etc. to reduce cost and to reduce the overall amount of time required in setting up an audio system to be tested. The disclosed audio emulator generally provides network interface flexibility, a new physical layer that is adaptable, software customizable, a cost and timing savings, and/or extendable interfaces, etc.

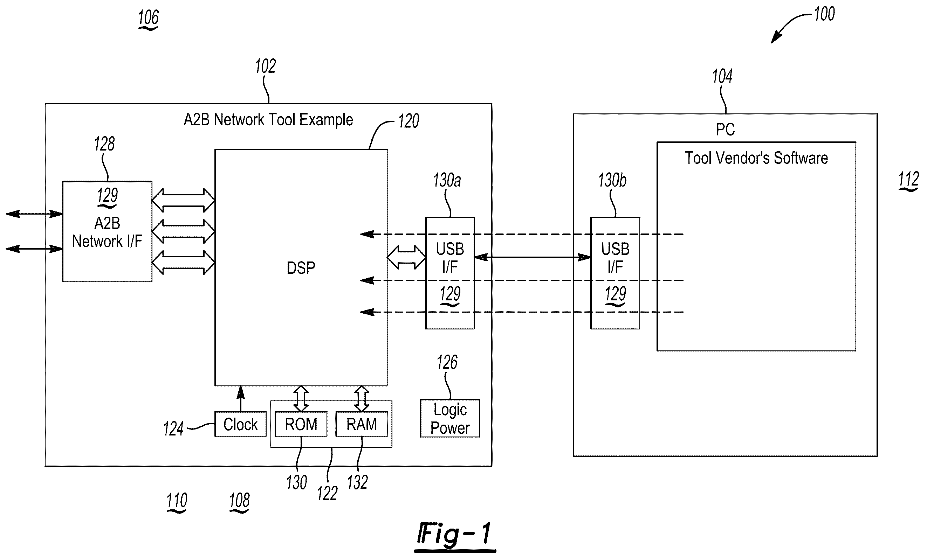

FIGURE 1 depicts one example of an audio emulator system 100 ("system 100"). The system 100 generally includes at least one audio controller 102 ("audio controller 102") and test equipment 104. The audio controller 102 and test equipment 104 may or may not be positioned in a vehicle 106. For example, the audio controller 102 and the test equipment 104 may be electrically coupled to one another. In addition, an amplifier 108 may be operably coupled to the audio controller 102. Similarly, any number of loudspeakers 110 may be operably coupled to the amplifier 108. In operation, the audio controller 102 may transmit an audio input signal to the amplifier 108. In turn, the amplifier 108 amplifies the audio input signal to generate an audio output signal. The loudspeaker 110 transmits the audio output signal into a listening environment 112. In one example, the listening environment 112 may correspond to an interior cabin of the vehicle 106.

The test equipment 104 may be utilized to test various aspects of the audio controller 102 and communication therebetween. The test equipment 104 may configured network nodes and related audio interface formats and other non-audio interfaces (e.g., SPI, I2C, GPIO) and can support the transfer of audio to and from the audio controller 102. The test equipment 104 may also support transmitting commands to and from the audio controller 102 as well. In various examples, the test equipment 104 may be used to characterize sound performance in the listening environment such as assessing frequency response, impulse response, etc. In addition, the test equipment 104 may play back audio from audio via the amplifier 108 and the loudspeaker 110 such as from a mono, stereo, or a Dolby ATMOS audio source and may also perform mute, volume control, equalization, and other audio-based features. In addition, the test equipment 104 may be used to measure a delay in terms of the amount of time required for the amplifier 108 to process the audio input signal and to generate and transmit the audio output signal.

The audio controller 102 generally includes at least one digital signal processor (DSP) 120 ("DSP 120"), a memory device 122, a clock circuit 124, a logic power circuit 126, a first network interface 128a, and a second network interface 130a. The first network interface 128 may be an A2B network interface that enables bi-directional communication between the audio controller 120 and other audio-based controllers or external controllers positioned in the vehicle 106. The audio controller 102 transmits clock information, audio data, non-audio data to and from an audio system via the first network interface 128. The second network interface 130a may be implemented as a Universal Serial Bus (USB) network interface that enable bi-directional communication between the audio controller 120 and the test equipment 104. The audio controller 102 and the test equipment 102 may communicate with one another, for example, via a universal serial bus (USB) protocol. The audio controller 102 transfers audio data, non-audio data to and from the test equipment 104.

The memory device 122 includes read only memory (ROM) 130 and random-access memory (RAM) 132. The clock circuit 124 is configured to transmit a clock signal that may be periodic and that oscillates between high and low at a constant frequency. The clock signal may synchronize the overall operation of the DSP 120. The implementation as shown in connection with FIGURE 1 may vary from project to project or from vehicle to vehicle. For example, depending on the implementation (or system requirements), the first network interface 128 (or audio communication protocol) may be any one of an eMOST network interface, an INICnet network interface, an A2B network interface, or an ethernet AVB. In addition, the first network interface 128 includes a network physical layer 129. In this regard, the network physical layer 129 may be an A2B 1.0 network layer, eMOST50 network layer, or INICnet50 network layer. In addition, the audio controller 120 may not be equipped with a network interface altogether. Similar complexities and options occur for the second network interface 130a and its network physical layer 129.

In addition, the test equipment 104 includes at least one controller 140 that executes instructions to perform the noted operations. In some instances, software associated with the test equipment 104 may be difficult for operators/engineers to work with and/or the software may not meet many test cases. Thus, it may be preferable to provide a universal audio emulator that can support any number of the different network interfaces, network layers, and software associated with the test equipment 104.

The test equipment 104 also includes a third network interface 130b that is operably coupled to the second network interface 130a to enable bi-directional communication between the audio controller 120 and the test equipment 104. The third network interface 130b includes a corresponding network physical layer 120. The test equipment 104 may utilize low layer communication bus such as USB to facilitate the transfer of audio data and non-audio data to and from the audio controller 102. The USB based communication bus generally transfer data as data blocks and additional overhead created by the USB protocol itself and a USB Driver. If the user is using the test equipment 104 to transfer or transmit two sets of data (e.g., datal and data2) to the audio controller 102, and an overall time between the transfer of data1 and data2 is short or small such as, for example, 1ms or less, the user may not be able to account for the short latency limitation created by the USB protocol. If the test equipment 104 transfers data1 to the audio controller 102, and then needs to receive data2 from the controller 102, and the user then checks to determine an overall time for transmitting data1 and receiving data2, this aspect may not be possible since the USB protocol and the USB driver may create a delay that may be difficult to fix or let alone know of the delay. The test equipment (via an Audio ECU emulator software module 270 (or first emulator software)) enables a user to assess the delays with respect to the transfer and/or receipt of data both to and from the audio controller 102 so that such delays may be resolved.

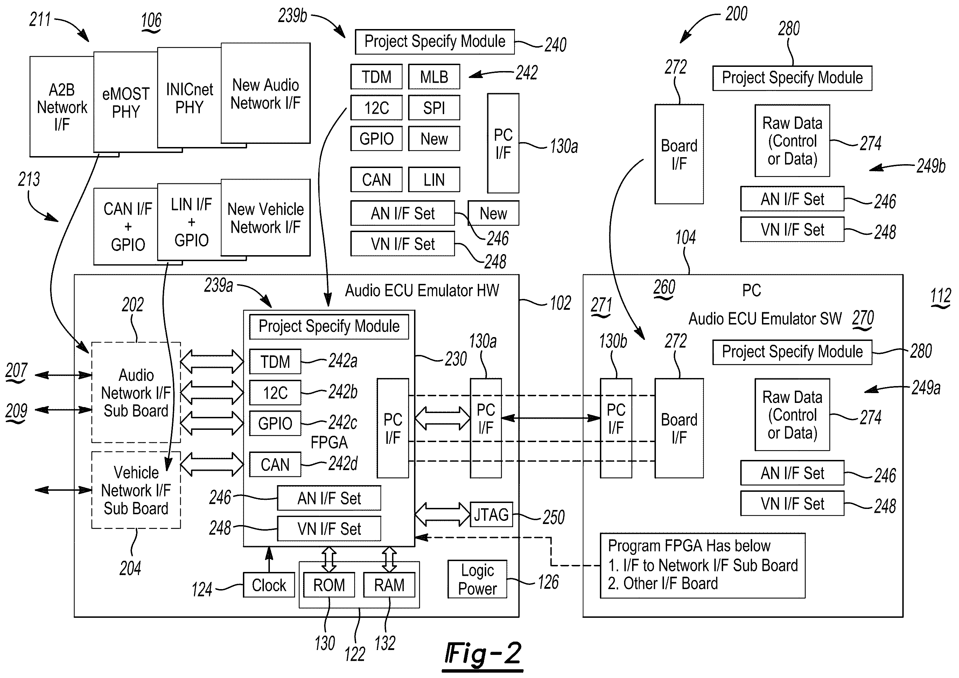

FIGURE 2 depicts an audio emulator system 200 in accordance with one embodiment. The audio emulator system 200 includes the audio controller 102 and the test equipment 104. As noted above, the audio controller 102 and test equipment 104 may or may not be positioned in the vehicle 106. In addition, the amplifier 108 may be operably coupled to the audio controller 102. Similarly, any number of loudspeakers 110 may be operably coupled to the amplifier 108. As noted above, the audio controller 102 may transmit an audio input signal to the amplifier 108. In turn, the amplifier 108 amplifies the audio input signal to generate an audio output signal. The loudspeaker 110 transmits the audio output signal into the listening environment 112. In one example, the listening environment 112 may correspond to the interior cabin of the vehicle 106.

As also noted above, the test equipment 104 may be utilized to test various aspects of the audio controller 102 and communication therebetween. However, aspects of the audio controller 102 may be modified such that the audio controller 102 provides universal connections to any number of the audio communication buses to facilitate communication with these communication buses.

The controller 102 includes a universal audio network interface sub-board 202 and a universal vehicle network interface sub-board 204. The universal audio network interface sub-board 202 may transmit audio related information to other controllers 207 in the vehicle 106 that may utilize information corresponding to the audio being played back by the audio controller 102 in the vehicle 106. For example, the audio controller 102 may provide information such as volume of the audio output signal that is being played back by the audio controller 102, captured audio information (e.g., voice data, road noise, etc.) from one or more microphones 209 positioned in the vehicle 106 for purposes of providing road noise cancellation, speech recognition, in-car communications, information corresponding to various operating characteristics of the amplifier 108. In addition, the audio controller 102 may be implemented as an audio network work master that (i) initializes an audio network, and other audio network nodes, (ii) transfers an audio stream (e.g., a main audio source such as AM, FM, CD, streaming audio, navigation based audio messages, short message readings etc.), and (iii) transfers non direct audio data (e.g., audio command(s), equalization changes/adjustments, volume control, mute control, fader, balance and tone control; diagnostic information/commands and reprograming information/commands. The audio controller 102 may receive information corresponding to the audio input signal, captured data from the one or more microphones etc. via the universal network interface sub-board 202. It is recognized that the system 200 may monitor or assess in combination with the test equipment 104 any of the noted features noted above (e.g., an audio stream (e.g., a main audio source such as AM, FM, CD, streaming audio, navigation based audio messages, short message readings etc.), and (iii) transfers non direct audio data (e.g., audio command(s), equalization changes/adjustments, volume control, mute control, fader, balance and tone control; diagnostic information/commands and reprograming information/commands, etc.)

The universal audio network interface sub-board 202 may comprise a sub-printed circuit board (PCB) that includes electronics that are adapted to support a plurality of audio communication buses such as A2B, eMOST, INICnet, etc. The universal audio network interface sub-board 202 may account for new audio networks such as new generation A2B implementations (e.g., later than A2B 2.0), INICnet bandwidth upgrades or newly release versions, bandwidth increases at over 50Mbps, or new releases of various chip solution such as Ethernet AVB, or other new audio network chips. In general, the A2B audio communication bus may provide audio data information to support active noise cancellation applications. The eMOST audio communication bus may provide audio data information that correspond to in-car entertainment applications which may make the eMOST audio communication bus preferable for high-quality audio and video that streams within the vehicle 106. The INICnet audio communication bus may also provide audio, video, ethernet, and control information.

The universal vehicle network interface sub-board 202 may transmit vehicle related information from the audio controller 102 to other controllers 211 in the vehicle 106. In addition, the universal vehicle network interface sub-board 204 may receive vehicle related information from other controllers in the vehicle 106. The universal vehicle network interface sub-board 202 may transmit information on various vehicle networks that support non-audio communications such as vehicle interfaces (or vehicle communication protocols) such as Controller Area Network (CAN), Local Interconnect Network (LIN), FlexRay, Clock Extension Peripheral Interface (CXPI), Ethernet, etc. The type of information that may comprise non-audio communication includes vehicle speed, notifications involving Advanced Driver Assistance Systems (ADAS), cabin temperature, exterior temperature, etc.

The universal vehicle network interface sub-board 204 may also comprise a sub-printed circuit board (PCB) that includes electronics that are adapted to support a plurality of vehicle communication buses such as CAN, LIN, etc. In general, the CAN vehicle communication bus may transmit data to and from the audio controller 102 at a faster rate than that of the LIN vehicle communication bus. The audio controller 102 includes at least one field programmable gate array (FPGA) 230 to execute operations performed by the audio controller 102. In general, the FPGA 230 includes any number of an array of logic blocks such as configurable logic blocks (CLBs) or logic array blocks (LABs) input/output pads, and routing channels. The FPGA 230 may be advantegous for implementation as the FPGA 230 may be customizable at the pin level and may be adapted to connect various pins thereof to various modules or boards such as TDM, I2C, CAN, LIN that may be positioned within the FPGA 230.

As shown, the universal audio network interface sub-board 202 may be adapted to utilize any number of audio interface sub-boards 211 such as an A2B network interface board, eMOST physical layer sub-board, INICnet physical layer sub-board, and a new audio network interface sub-board that may account of future audio interfaces and/or revisions/upgrades to any of the noted audio interfaces. Such boards 211 Similarly, the universal vehicle network interface sub-board 2024 may be adapted to utilize any number of vehicle interface sub-boards 213 such as an CAN + GPIO interface board, a LIN + GPIO interface board, and a new vehicle network interface sub-board that may account of future vehicle interfaces and/or revisions/upgrades to any of the noted vehicle interfaces. The various sub-boards 211 and 213 may be adapted at the pin level to interface directly with the FPGA 230 to minimize changes to the audio emulator system 200.

The FPGA 230 includes a first project specific implementation 239a having a project specify module 240 and a plurality of communication blocks 242a - 242d. It is recognized that the project specific implementation 239a may vary based on the particular type of vehicle 106 and or implementation that is desired. A second project specific implementation 239b is illustrated that provides a project specify module 240 and a plurality of communication blocks as generally shown at 242 for another vehicle or project. This will be discussed in more detail below. In general, the plurality of communication blocks 242a - 242d generally enable bi-directional communication between the universal audio network interface sub-board 202, the universal vehicle network interface sub-board 204 and the FPGA 230. For example, communication block 242a may be a time division multiplexing (TDM) communication link, communication block 242b may be an I2C communication link, time division multiplexing (TDM) block 242c may be an I2C block 244, and communication block 242c may be a general-purpose input/output (GPIO) block 242c. These blocks 242a - 242c may facilitate communication between the universal audio network interface sub-board 202 and the blocks 242a - 242c. For example, the block 242a may be implemented as a TDM block 242a, the block 242b, may be implemented as an I2C block 242b, the block 242c may be implemented as an GPOI block 242c. The communication block 242d may be a CAN block 242d to enable communication between the universal audio network interface sub-board 204 and the FPGA 230. The various block 242a - 242d may be specific for a particular vehicle 106 any may change based on the particular vehicle or implementation.

The FPGA 230 includes an audio network interface set 246 and a vehicle network interface set 248. The audio network interface 246 generally configures the audio network interface sub-board 202 with various functions such as, for example, internal register setting(s) for an audio network, settings for other audio network nodes (e.g., A2B, eMOST, INICnet, etc.) as well, in a predefined sequence to support any number of modes/statuses. The vehicle network interface set 248 generally configures the vehicle network interface sub-board 204 with various functions such as, for example, internal register setting(s) for a vehicle network, settings for other vehicle network nodes (e.g., A2B, eMOST, INICnet, etc.) as well, in a predefined sequence to support any number of modes/statuses for vehicle communications.

The FPGA 230 includes the project specify module 240 which specifies time critical information for a particular vehicle implementation for both audio and vehicle communications relative to the FPGA 230 and the vehicle 106 in addition to audio and vehicle communications to and from the test equipment. For example, the project specify module 240 transmit data1 at a particular point and time and be programmed to transmit data2 at a second time (e.g., 0.5ms) after transmitting data1. Conversely, the project specify module 240 may transmit data (e.g., data1) in, for example, 2 ms, and then check to determine if a second set of data (e.g., data2) has been received. Once confirmed, the project specify module 204 may then transmit data 3 within another specified time periods, such as, for example, 1ms. In this case, the test equipment 104 perform time critical functions/sequences and provide information related to the time critical sequence to the FPGA 230 to avoid limitation(s) that may be caused by a delay with a personal computer that forms at least a portion of the test equipment 104.

As noted above, FIGURE 2 illustrates the second project specific implementation 239b that provides another project specify module 240 and a plurality of communication blocks as generally shown at 242 for another vehicle or project. It is recognized that there may be any number of project specific implementations. Thus, in this regard the FPGA 203 may be customizable (or reconfigurable) to support different types of communication protocols for both audio and vehicle implementations based on any number of different project specify modules 240, communication blocks 242, the second network interface 130a, the audio network interface set 246, and the vehicle network interface set 248. The communication blocks 242 may include a TDM block, an I2C block, a GPIO block, a Media Local Bus (MLB) block, and a serial peripheral interface (SPI) block for audio related features. As noted above, the project specify module 240 within the FPGA 230 provides time critical function for receiving, transmitting, and monitoring data within critical timing requirement to initiate the transmission of data to audio and/or vehicle related systems and with the test equipment 140. The project specify module 240 may interface with the test equipment 104 do perform these time critical sequences. Thus, the project specify module 240 provides a mechanism on the FPGA 230 to monitor time critical sequences within the FPGA 230 to avoid limitation caused by delays with the PC that forms the test equipment 104.

A joint test action group (JTAG) port 250 is operably coupled to the FPGA 230 which provides a serial communications interface to access a set of test registers for various chip logic levels. The JTAG port 250 enables the verification of the design and testing printed circuit boards once manufactured.

As noted above, the test equipment 104 may be implemented as PC (hereafter referred to as PC 104) that include any number of processors 269 and memory 271 to execute software modules or emulators. For example, the test equipment 104 includes memory 271 that stores information that correspond to an audio electronic control unit (ECU) emulator software module 270 (or first emulator software). The various processors 269 may execute the audio ECU emulator software module 270 to perform various operations noted herein. In general, the audio ECU emulator software module 270, when executed, allows a user to create files, modify files, load files, edit file, and/or log data related to the bi-direction transfer of information between the PC 104 and the audio controller 102. The PC 104 may display related to various testing information for audio and vehicle characteristic of interest to the user. For example, such information may correspond to testing capabilities, measurements, and results associated with testing an audio system in the vehicle 106. The audio ECU emulator software module 270, when executed, 270 generally interfaces with the audio controller 102 that corresponds to the hardware based an audio ECU emulator. The PC 104 also includes a PCB interface block 272, a control data block 274, and a project specify module 280. The PCB interface 272 may utilize, in one example, a USB protocol to receive data from the audio controller 102 and to transmit data to the audio controller 102 via the third network interface 130b.The control data block 274 may enable the receipt and transmission of audio data to and from the audio controller 102.

As noted above, the audio network interface 246 generally configures the audio network interface sub-board 202 with various functions such as, for example, internal register setting(s) for an audio network, settings for other audio network nodes (e.g., A2B, eMOST, INICnet, etc.) as well, in a predefined sequence to support any number of modes/statuses. The vehicle network interface set 248 generally configures the vehicle network interface sub-board 204 with various functions such as, for example, internal register setting(s) for a vehicle network, settings for other vehicle network nodes (e.g., A2B, eMOST, INICnet, etc.) as well, in a predefined sequence to support any number of modes/statuses for vehicle communications.

It is recognized that the PC 104 includes a first project specific implementation 249a having a project specify module 280, the third network interface 130b, the audio network interface set 246, the vehicle network interface set 248, the PCB interface block 272, and the control data block 274 that may be implemented for a particular vehicle or implementation. It is recognized that the project specific implementation 249a may vary based on the particular type of vehicle 106 and or implementation that is desired. A second project specific implementation 249b is illustrated that provides for another vehicle or project that may include different or the same sets of the project specify module 280, the third network interface 130b, the audio network interface set 246, the vehicle network interface set 248, the PCB interface block 272, and the control data block 274.

In general, the utilization of the FPGA 230 provides a modular concept that enables a faster design and provides increased design quality. For example, consider that a first project utilizes communication blocks 242 such as TDM, I2C, CAN for a first FPGA. For a second project, it is possible to utilize a second FPGA that utilizes new communication blocks 242 and continue common communication blocks 242 between the first and second FPGA.

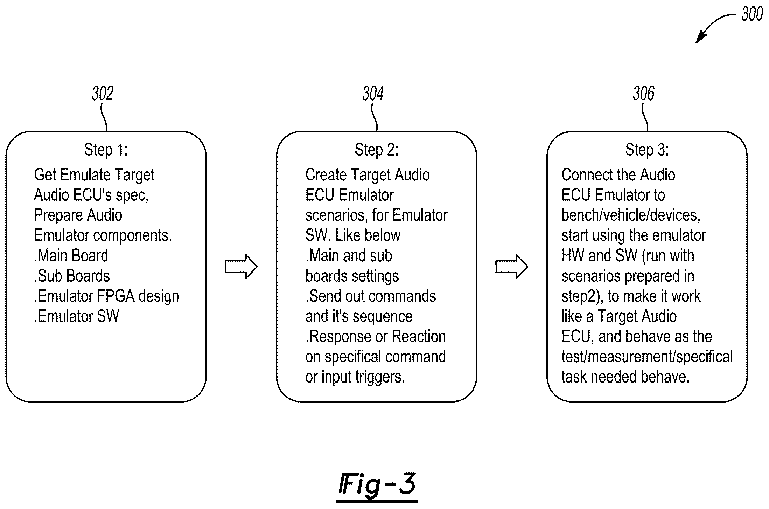

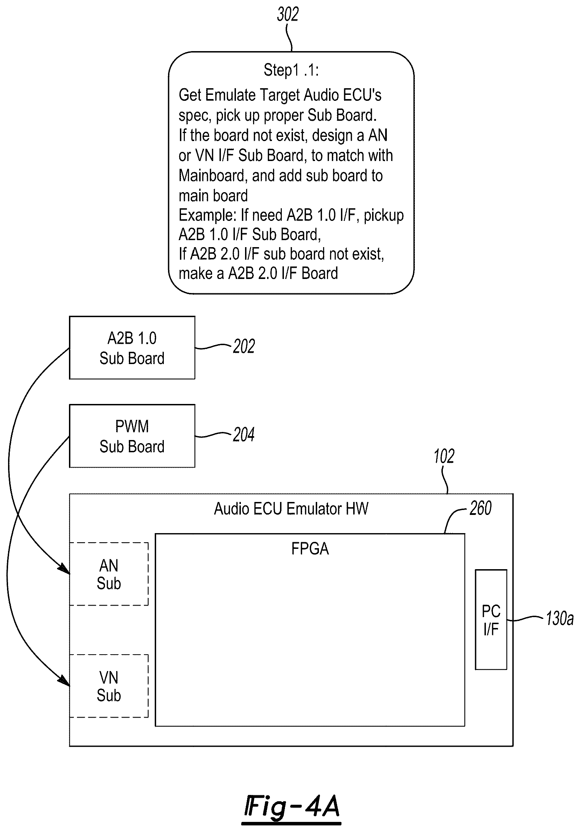

FIGURE 3 depicts a process flow 300 for the audio emulator system 200 in accordance with one embodiment. The process flow 300 includes operations 302, 304, and 306. In operation 302, a specification for the audio controller 102 (or the hardware-based audio ECU emulator) is obtained. In operation 304, target audio emulators are generated for, for example, audio ECU emulator software module 270 of the PC 104. In operation 306, the audio controller 102 forms a connection with the PC 104. These operations will be discussed in more detail in connection with FIGUREs 4A - 4C.

FIGUREs 4A - 4C depict the process flow of FIGURE 3 which references aspects related to the audio emulator system 200 in accordance with one embodiment. As noted above, in operation 302, the specification for the audio controller 102 (or the hardware-based audio ECU emulator) is obtained. In reference to FIGURE 4A, the operation 302 includes selecting the proper universal audio network interface sub-board 202 and the universal vehicle network sub-board 204. If either of the boards 202 and/or 204 are not available as an off the shelf solution, a designer may develop the boards 202 and/or 204 to interface with various pin connections for a primary FPGA 260 (or main board). Once developed or if previously existing, the boards 202 and/or 204 may electrically connected to the primary FPGA 260. For example, if it is desirable to utilize an A2B 2.0 interface board and the only A2B board available is an A2B 1.0 interface board, then the designer may develop the A2B interface board for coupling to the primary FPGA 230.

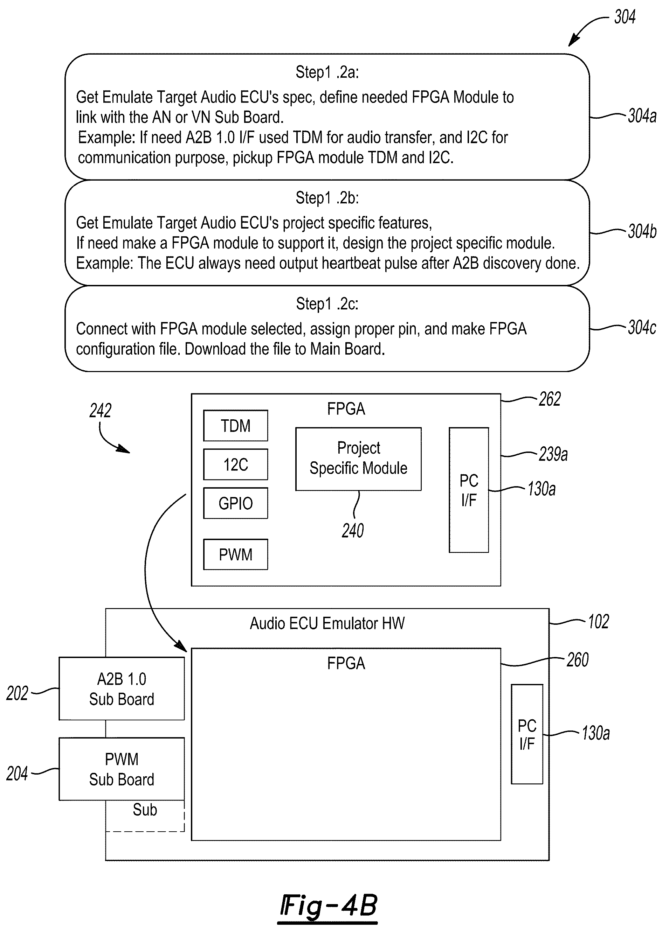

In reference to FIGURE 4B, in operation 304, target audio emulators are generated, for example, for the audio ECU emulator software module 270 of the PC 104. In general, a sub FPGA 262 (or secondary FPGA 262) may be developed for a project specific implantation 239 for coupling to the primary FPGA 260. Operation 304 may be divided into three sub-operations 304a, 304b, 304c. In operation 304a, the designer generates specifications for the audio controller 102 (or the hardware-based audio ECU emulator) to link or couple to, for example, as shown in FIGURE 4B, an A2B audio network interface sub-board 202, In this case, the designer also selects communication blocks 242 for audio transmission a TDM communication block and I2C for communication purposes. In addition, the designer generates specification for the audio controller 102 to link to or couple to, for example, a PWM vehicle network interface sub-board 204 that utilizes a PWM communication block.

In operation 304b, the designer develops project specific features to develop the project specific module 240. One example of a project specific feature may correspond to the need for a heartbeat pulse after anA2B discovery mode is complete. In operation 304c, the sub FPGA 262 is coupled or connected to the primary FPGA 260 where an FPGA configuration file is created. The FPGA configuration file includes information corresponding to parameters and settings for related to the protocols utilized for the communication blocks 242 (e.g., TDM, I2C, GPIO, PWM) in addition to the audio protocol-based sub board 202 and the vehicle protocol-based sub board 204.

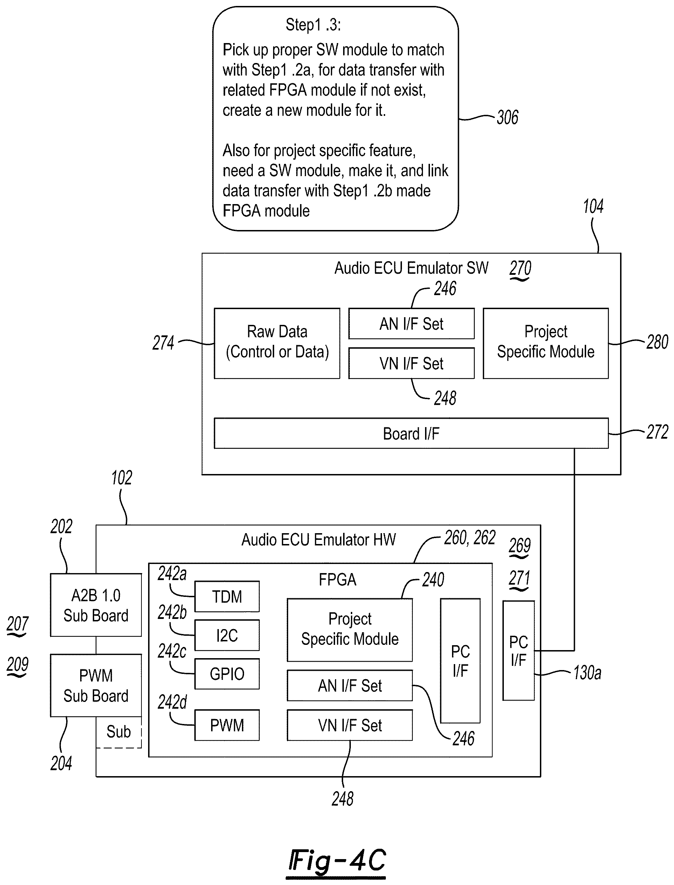

In reference to FIGURE 4C, in operation 306, the audio controller 102 forms a connection with the PC 104. For example, a proper audio ECU emulator SW 270 is developed to support the transfer of data to and from the audio controller 102. For example, the audio ECU emulator SW 270, when executed by the PC 104, enables communication with the both the primary FPGA 260 and the sub FPGA 262.

In general, the audio controller 102 includes an interchangeable audio network interface sub-board 202 and an interchangeable vehicle network interface sub-board 204 that may enable and improve board reuse and easy updates/upgrades. The audio network interface sub-board 202 may be an existing sub-board, a new sub-board that supports a new audio protocol, and/or is connectable to the primary FPGA 260. The vehicle network interface sub-board 204 may be an existing sub-board, a new sub-board that supports a new vehicle protocol, and/or is connectable to the primary FPGA 260.

The sub FPGA 262 is created that is changeable and connectable to the primary FPGA 260. The sub FPGA 262 utilizes any number of communication blocks 242 to support various audio and vehicle protocols used in connection with the audio network interface sub-board 202 and the vehicle network interface sub-board 204 that are coupled to the primary FPGA 260. In addition, new communication blocks 242 may be developed to support new audio and/or vehicle communication protocols. The audio ECU emulator SW 270 includes instructions or information to, when executed by the PC 104, transfer data to and from the PC 104 and the audio controller 102. The PC 104 includes the project specify module 280 that is customized for specific project needs and aids in transferring data to the primary FPGA 260. The audio ECU emulator SW 270, when executed by the PC 104, can support the creation, loading, modifying of data to enable both the audio controller 102 and the PC 104 to operate as an optimal test/measurement mechanism to aid in testing audio and/or vehicle information.

The system 100 provides the flexibility of network interface adaptation (e.g., communication blocks 242 (e.g., audio or vehicle protocols) positioned on the sub FPGA 262 that is coupled to the primary FPGA 260 to support the various audio protocols provided by the audio network interface sub-board 202 and to support the various vehicle protocols provided by the vehicle network interface sub-board 204. The primary FPGA 260 and the sub FPGA 262 enables flexibility between the interface sub-boards 202, 204 and the audio/vehicle layer interfaces with network chip updates. The PC 104 (i.e., the audio ECU emulator SW 270) is programmable and latency tests performed by the audio controller 102 may be modified as testing requirements dictate. The system 200 may reserve an extension of GPIO, and another interface such as CAN.

It is recognized that the controllers as disclosed herein may include various microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, such controllers as disclosed utilizes one or more microprocessors to execute a computer-program that is embodied in a non-transitory computer readable medium that is programmed to perform any number of the functions as disclosed. Further, the controller(s) as provided herein includes a housing and the various number of microprocessors, integrated circuits, and memory devices ((e.g., FLASH, random access memory (RAM), read only memory (ROM), electrically programmable read only memory (EPROM), electrically erasable programmable read only memory (EEPROM)) positioned within the housing. The controller(s) as disclosed also include hardware-based inputs and outputs for receiving and transmitting data, respectively from and to other hardware-based devices as discussed herein.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

### FURTHER EXAMPLES

Example 1. An emulator system comprising: at least one first audio controller including: a primary field programmable gate array (FPGA) being programmed to one of transmit and receive at least one audio signal and at least one vehicle information signal in a vehicle; a universal audio network interface sub-board being operably coupled to the primary FPGA and being programmed to one or more of transmitting or receiving the at least one audio signal in accordance with one or more audio network interfaces; and a universal vehicle network interface sub-board being operably coupled to the primary FPGA and being programmed to one or more of transmitting or receiving the at least one vehicle information signal in accordance with one or more vehicle network interfaces; and a secondary FPGA being operably coupled to the primary FPGA and including: a first communication block that is programmed to enable the primary FPGA to one of transmit or receive the at least one audio signal in accordance with the one or more audio network interfaces to or from the universal audio network interface sub-board; and a second communication block that is programmed to enable the primary FPGA to one of transmit or receive the at least one vehicle information signal in accordance with the one or more vehicle network interfaces to or from the universal vehicle network interface sub-board.

Example 2. The emulator system of example 1 further comprising test equipment including one or more processors and memory programmed to store first emulator software, the one or more processors are programmed to execute the first emulator software to bidirectionally communicate with the at least one first audio controller.

Example 3. The emulator system of example 2, wherein the one or more processors are further programmed to execute the first emulator software to further provide information corresponding to one or more of testing capabilities and audio measurements for an audio system.

Example 4. The emulator system of example 2 or 3 wherein the one or more processors are further programmed to execute the first emulator software to determine an overall amount of time that has elapsed between the transfer of a first set of data and a second set of data to the first audio controller.

Example 5. The emulator system of any of examples 2 to 4 wherein the one or more processors are further programmed to execute the first emulator software to determine an overall amount of time that has elapsed between the transfer of a first set of data to the first audio controller from the test equipment and the receipt of a second set of data from the first audio controller at the test equipment.

Example 6. The emulator system of any of examples 1 to 5, wherein the one or more audio network interfaces corresponds to one of an electronic Media Orientated Systems Transport (eMOST), INICnet, an Automotive Audio Bus (A2B), and Ethernet audio video bridging (AVB).

Example 7. The emulator system of example 6, wherein the one or more vehicle network interfaces corresponds to one of a Controller Area Network (CAN), Local Interconnect Network (LIN), FlexRay, Clock Extension Peripheral Interface (CXPI), and Ethernet.

Example 8. The emulator system of any of examples 1 to 7, wherein at least the first audio controller monitors any one or more of an audio stream, navigation based audio, message reading, audio commands, equalization changes/adjustments, volume control, mute control, fader, balance, tone control, diagnostic information for an audio system.

Example 9. The emulator system of any of examples 1 to 8, wherein the at least one vehicle information signal corresponds to one of vehicle speed, notifications involving Advanced Driver Assistance Systems (ADAS), cabin temperature, and exterior temperature.

Example 10. An emulator system comprising: at least one first audio controller including: a primary field programmable gate array (FPGA) being programmed to one of transmit and receive at least one audio signal in a vehicle; a universal audio network interface sub-board being operably coupled to the primary FPGA and being programmed to one or more of transmitting or receiving the at least one audio signal in accordance with one or more audio network interfaces; and a secondary FPGA being operably coupled to the primary FPGA and including: a first communication block that is programmed to enable the primary FPGA to one of transmit or receive the at least one audio signal in accordance with the one or more audio network interfaces to or from the universal audio network interface sub-board.

Example 11. The emulator system of example 10 further comprising test equipment including one or more processors and memory programmed to store first emulator software, the one or more processors are programmed to execute the first emulator software to bidirectionally communicate with the at least one first audio controller.

Example 12. The emulator system of example 11, wherein the one or more processors are further programmed to execute the first emulator software to further provide information corresponding to one or more of testing capabilities and audio measurements for an audio system.

Example 13. The emulator system of example 11 or 12 wherein the one or more processors are further programmed to execute the first emulator software to determine an overall amount of time that has elapsed between the transfer of a first set of data and a second set of data to the first audio controller.

Example 14. The emulator system of any of examples 11 to 13 wherein the one or more processors are further programmed to execute the first emulator software to determine an overall amount of time that has elapsed between the transfer of a first set of data to the first audio controller from the test equipment and the receipt of a second set of data from the first audio controller at the test equipment.

Example 15. The emulator system of any of examples 10 to 14, wherein the one or more audio network interfaces corresponds to one of an electronic Media Orientated Systems Transport (eMOST), INICnet, an Automotive Audio Bus (A2B), and Ethernet audio video bridging (AVB).

Example 16. The emulator system of any of examples 10 to 15 further comprising a universal vehicle network interface sub-board being operably coupled to the primary FPGA and being programmed to one or more of transmitting or receiving at least one vehicle information signal in accordance with one or more vehicle network interfaces.

Example 17. The emulator system of example 16, wherein the secondary FPGA further includes a second communication block that is programmed to enable the primary FPGA to one of transmit or receive the at least one vehicle information signal in accordance with the one or more vehicle network interfaces to or from the universal vehicle network interface sub-board.

Example 18. The emulator system of any of examples 10 to 17, wherein the at least one vehicle information signal corresponds to one of vehicle speed, notifications involving Advanced Driver Assistance Systems (ADAS), cabin temperature, and exterior temperature.

Example 19. An emulator system comprising: a primary field programmable gate array (FPGA) being programmed to one of transmit and receive at least one audio signal and at least one vehicle information signal in a vehicle; a universal audio network interface sub-board being operably coupled to the primary FPGA and being programmed to one or more of transmitting or receiving the at least one audio signal in accordance with one or more audio network interfaces; and a universal vehicle network interface sub-board being operably coupled to the primary FPGA and being programmed to one or more of transmitting or receiving the at least one vehicle information signal in accordance with one or more vehicle network interfaces; and a secondary FPGA being operably coupled to the primary FPGA and including: a first communication block that is programmed to enable the primary FPGA to one of transmit or receive the at least one audio signal in accordance with the one or more audio network interfaces to or from the universal audio network interface; and a second communication block that is programmed to enable the primary FPGA to one of transmit or receive the at least one vehicle information signal in accordance with the one or more vehicle network interface to or from the universal vehicle network interface sub-board.

Example 20. The emulator system of example 19, wherein the one or more audio network interfaces corresponds to one of an electronic Media Orientated Systems Transport (eMOST), INICnet, an Automotive Audio Bus (A2B), and Ethernet audio video bridging (AVB).

## Claims

1. An emulator system comprising:
at least one first audio controller including:
a primary field programmable gate array (FPGA) being programmed to one of transmit and receive at least one audio signal in a vehicle;
a universal audio network interface sub-board being operably coupled to the primary FPGA and being programmed to one or more of transmitting or receiving the at least one audio signal in accordance with one or more audio network interfaces; and
a secondary FPGA being operably coupled to the primary FPGA and including:
a first communication block that is programmed to enable the primary FPGA to one of transmit or receive the at least one audio signal in accordance with the one or more audio network interfaces to or from the universal audio network interface sub-board.

2. The emulator system of claim 1 further comprising test equipment including one or more processors and memory programmed to store first emulator software, the one or more processors are programmed to execute the first emulator software to bidirectionally communicate with the at least one first audio controller.

3. The emulator system of claim 2, wherein the one or more processors are further programmed to execute the first emulator software to further provide information corresponding to one or more of testing capabilities and audio measurements for an audio system.

4. The emulator system of claim 2 wherein the one or more processors are further programmed to execute the first emulator software to determine an overall amount of time that has elapsed between the transfer of a first set of data and a second set of data to the first audio controller.

5. The emulator system of claim 2 wherein the one or more processors are further programmed to execute the first emulator software to determine an overall amount of time that has elapsed between the transfer of a first set of data to the first audio controller from the test equipment and the receipt of a second set of data from the first audio controller at the test equipment.

6. The emulator system of claim 1, wherein the one or more audio network interfaces corresponds to one of an electronic Media Orientated Systems Transport (eMOST), INICnet, an Automotive Audio Bus (A2B), and Ethernet audio video bridging (AVB).

7. The emulator system of claim 1 further comprising a universal vehicle network interface sub-board being operably coupled to the primary FPGA and being programmed to one or more of transmitting or receiving at least one vehicle information signal in accordance with one or more vehicle network interfaces.

8. The emulator system of claim 7, wherein the secondary FPGA further includes a second communication block that is programmed to enable the primary FPGA to one of transmit or receive the at least one vehicle information signal in accordance with the one or more vehicle network interfaces to or from the universal vehicle network interface sub-board.

9. The emulator system of claim 1, wherein the at least one vehicle information signal corresponds to one of vehicle speed, notifications involving Advanced Driver Assistance Systems (ADAS), cabin temperature, and exterior temperature.

10. The emulator system of claim 7, wherein the one or more vehicle network interfaces corresponds to one of a Controller Area Network (CAN), Local Interconnect Network (LIN), FlexRay, Clock Extension Peripheral Interface (CXPI), and Ethernet.

11. The emulator system of claim 1, wherein at least the first audio controller monitors any one or more of an audio stream, navigation based audio, message reading, audio commands, equalization changes/adjustments, volume control, mute control, fader, balance, tone control, diagnostic information for an audio system.
